# EUROPÄISCHE PATENTSCHRIFT

(11) **EP 2 651 687 B1**
(45) Veröffentlichungstag und Bekanntmachung des Hinweises auf die Patenterteilung: **29.03.2017**
(21) Anmeldenummer: 11779678.9
(22) Anmeldetag: 09.11.2011
(51) Int. Cl.: B60L 11/18, B60L 3/00, B60L 3/04, H02J 7/02

(54) **VORRICHTUNG ZUR INDUKTIVEN ÜBERTRAGUNG ELEKTRISCHER ENERGIE**
DEVICE FOR THE INDUCTIVE TRANSFER OF ELECTRIC ENERGY
DISPOSITIF DE TRANSFERT INDUCTIF D'ÉNERGIE ÉLECTRIQUE

(30) Priorität: 14.12.2010 DE 102010054472
(43) Veröffentlichungstag der Anmeldung: 23.10.2013
(73) Patentinhaber: Conductix-Wampfler GmbH, 79576 Weil am Rhein (DE)
(72) Erfinder: ASSELIN, Pascal, F-68400 Riedisheim (FR)
(74) Vertreter: Charrier Rapp & Liebau
(86) Internationale Anmeldenummer: PCT/EP2011/069763
(87) Internationale Veröffentlichungsnummer: WO 2012/079860

(56) Entgegenhaltungen:
- WO-A1-2009/081115
- WO-A1-2010/115867
- WO-A2-2010/099887
- US-A- 4 496 896
- US-A1- 2008 079 392
- US-A1- 2010 295 506

## Beschreibung

Die Erfindung betrifft eine Vorrichtung zur induktiven Übertragung elektrischer Energie nach dem Oberbegriff der Ansprüche 1 und 2.

Beim Laden der Batterie eines Elektrofahrzeugs besteht die Notwendigkeit, den Ladestrom in Abhängigkeit von den Spezifikationen der Batterie sowie von deren aktuellem Ladezustand jederzeit auf einen angemessenen Wert einzustellen. Die hierzu notwendige Ladeelektronik kann wahlweise an Bord des Fahrzeugs oder in der Ladestation angeordnet sein. Bei einer induktiven Energieübertragung von der Ladestation zum Fahrzeug muss die Ladestation bei einer Anordnung der gesamten Ladeelektronik im Fahrzeug ständig die maximal mögliche Ladeleistung anbieten und diese Leistung muss dann im Fahrzeug auf den momentan benötigten Wert heruntergeregelt werden. Dies führt zu relativ hohen Leistungsverlusten sowohl auf der Primärseite als auch auf der Sekundärseite und erfordert eine entsprechend robuste und daher aufwendige Auslegung der sekundärseitigen Ladeelektronik.

Um dies zu vermeiden, kann die primärseitig angebotene Leistung in Abhängigkeit vom sekundärseitigen Leistungsbedarf geregelt werden, wozu jedoch eine entsprechende Kommunikation von der Sekundärseite zur Primärseite nötig ist. Diese Kommunikation kann entweder über einen vollkommen separaten Kommunikationskanal, beispielsweise über eine Funkverbindung abgewickelt werden, oder es kann ein Datensignal auf die zur induktiven Energieübertragung vorgesehene Übertragungsstrecke aufmoduliert werden. Beide Lösungen erfordern aber spezielle kommunikationstechnische Hardware auf der Primär- und Sekundärseite, was mit entsprechenden Kosten verbunden ist.

Aus der DE 696 02 739 T2 ist ein Traktionsbatterieladesystem mit induktiver Ankopplung bekannt, bei dem die Ladestation von einem fahrzeugseitigen Batterieladesteuermodul aus steuerbar ist. Zur Kommunikation zwischen diesem Batterieladesteuermodul und der Ladestation ist ein Datenkommunikationsmittel vorgesehen, bei dem es sich um ein Datenkabel, einen Lichtwellenleiter, oder um eine Funkübertragungsstrecke handeln kann.

Die DE 101 58 794 B4 lehrt bei einem induktiven kontaktlosen Leistungsübertrager für Kleingeräte wie Mobiltelefone und elektrische Zahnbürsten die Einstellung der primärseitigen Leistung in Abhängigkeit vom sekundärseitigen Leistungsbedarf durch eine primärseitige Steuereinheit, welche die Leistungsübertragung bei geringem sekundärseitigem Leistungsbedarf durch Variation des Tastverhältnisses und bei hohem sekundärseitigem Leistungsbedarf durch Variation der Frequenz eines primärseitigen spannungsgesteuerten Oszillators steuert.

Die WO 2009/081115 A1 lehrt ein Verfahren zum Detektieren der Präsenz einer Sekundäreinheit oder eines leitfähigen Fremdkörpers benachbart zur Primärspule eines Systems zur induktiven Übertragung elektrischer Leistung. Hierbei wird das in die Primärspule eingespeiste Signal gezielt variiert und anhand einer primärseitigen Messung einer durch die Variation des Primärsignals ausgelösten Rückwirkung von der Sekundärseite zur Primärseite wird entschieden, ob benachbart zu der Primärspule eine Sekundäreinheit oder ein leitfähiger Fremdkörper vorhanden ist.

Die WO 2010/115867 A1 zeigt eine Vorrichtung zur berührungsfreien von Leistung zum Laden von Elektrofahrzeugen, bei dem das Fahrzeug per Funk oder ebenfalls durch induktive oder kapazitive Übertragung die gewünschte Lade-Leistung, die auch negativ sein kann, an einen stationärseitigen Umrichter bzw. dessen Steuerung überträgt. Dieser passt daraufhin durch Nachführung des Sollwertes für seine Zwischenkreisspannung den Leistungsfluss an den gewünschten Wert an.

Die US 2010/0295506 A1 offenbart eine Vorrichtung zum induktiven Laden der Batterie eines Elektrofahrzeugs, bei der eine von der zur Energieübertragung verwendeten Primär- und Sekundärspule separate Übertragungsstrecke zwischen einer fahrzeugseitigen Kommunikationseinheit und einer stationären Kommunikationseinheit vorgesehen ist. Die stationäre Kommunikationseinheit ist mit einem primärseitigen Leistungsregler verbunden, wodurch eine Anpassung der eingespeisten Primärleistung an den sekundärseitigen Leistungsbedarf ermöglicht wird.

Der Erfindung liegt die Aufgabe zugrunde, für das induktive Laden eines Elektrofahrzeugs an einer Ladestation eine einfache und kostengünstige Lösung zur Regelung des Ladevorgangs aufzuzeigen.

Diese Aufgabe wird erfindungsgemäß durch eine Vorrichtung mit den Merkmalen der Ansprüche 1 und 2 gelöst. Vorteilhafte Ausgestaltungen der Erfindung sind in den Unteransprüchen angegeben.

Erfindungsgemäß weist bei einer gattungsgemäßen Vorrichtung zur induktiven Übertragung elektrischer Energie das Fahrzeug einen Sekundärregler zur Einstellung der aus der Sekundärinduktivität entnommenen Sekundärleistung auf, der eine Schalteinrichtung enthält, mittels derer die entnommene Sekundärleistung stufenweise änderbar ist. Die stationäre Einheit weist einen Primärregler zur Einstellung der in die Primärinduktivität einspeisbaren Primärleistung auf, der eine erste Messeinrichtung enthält, mittels derer ein von der Sekundärleistung beeinflusster elektrischer Betriebsparameter der Stromversorgungseinrichtung messbar ist und der Primärregler stellt die einspeisbare Primärleistung in Abhängigkeit von Änderungen des von der ersten Messeinrichtung gemessenen Betriebsparameters ein. Hierbei ist mit Primär- und Sekundärleistung stets die Wirkleistung gemeint und das Attribut einspeisbar bedeutet, dass die Primärleistung nicht eingeprägt sondern angeboten wird und die tatsächlich in die Primärspule fließende Leistung auch davon abhängt, welche Leistung der Sekundärspule entnommen wird.

Hierdurch wird die Möglichkeit eröffnet, die zugeführte Primärleistung von der Sekundärseite aus bedarfsgerecht zu regeln, ohne dass hierzu ein separater Kommunikationskanal mit entsprechender Hardware eingerichtet werden muss. Sekundärseitig wird lediglich eine Schalteinrichtung zur stufenweisen Einstellung der Sekundärleistung, vorzugsweise zu dere Anschaltung und Abschaltung, benötigt. Eine solche Schalteinrichtung muss ohnehin vorhanden sein, um die Energieübertragung bei Bedarf sekundärseitig beenden zu können, insbesondere wenn beim Laden einer Fahrzeugbatterie diese voll geladen ist oder wenn ein Fehler irgendeiner Art auftritt. Daher fällt durch die erfindungsgemäße Lösung sekundärseitig kein zusätzlicher Hardwareaufwand an. Gleiches gilt sinngemäß auch primärseitig, da die Energieübertragung dort ohnehin messtechnisch überwacht werden muss und im Regelfall ohnehin eine Einrichtung zur Einstellung der einspeisbaren Primärleistung vorhanden ist. Zur Übertragung der Information über den sekundärseitigen Leistungsbedarf wird die vorhandene induktive Übertragungsstrecke mitbenutzt, und zwar ohne Frequenzmultiplex, d.h. ohne die Notwendigkeit einer Modulation und Demodulation. Die Anwendung der Erfindung ist das Laden einer Fahrzeugbatterie. Hierbei ist sekundärseitig eine Messung des Ladestromes vorgesehen.

Eine erste Variante der Erfindung sieht bei einer Überschreitung des Sollwertes des Ladestromes durch den gemessenen Wert eine periodische Umschaltung der Sekundärleistung zwischen zwei Stufen in einem vorbestimmten Zeittakt vor, wobei das Tastverhältnis dieser Umschaltung dem Verhältnis zwischen dem Sollwert und dem gemessenen Wert des Ladestromes entspricht. Der Primärregler erhält hierdurch unmittelbar die Information über das nötige Ausmaß der Reduzierung der Primärleistung und kann diese dementsprechend einstellen. Wenn eine der beiden Stufen der Sekundärleistung einer Abschaltung entspricht, wird der Mittelwert der aufgenommenen Sekundärleistung bereits vorab im nötigen Ausmaß reduziert, bevor der Primärregler reagiert und die Primärleistung entsprechend reduziert.

Eine andere Variante der Erfindung sieht bei einer Überschreitung des Sollwertes des Ladestromes durch den gemessenen Wert eine Umschaltung auf die niedrigere von zwei Stufen vor, vorzugsweise eine Abschaltung, die solange andauert, bis ein in der niedrigeren Stufe von der Primärleistung abhängiger elektrischer Betriebsparameter der Sekundärseite einen Wert erreicht, bei dem eine Umschaltung in die höhere Stufe zu einer Übereinstimmung des Ladestromes mit seinem Sollwert führt. In diesem Fall verringert der Primärregler den Wert der Primärleistung mit einer vorbestimmten zeitlichen Rate so lange, bis primärseitig detektiert wird, das sekundärseitig wieder in die höhere Stufe geschaltet wurde. Ach auf diese Weise wird die Aufnahme einer zu großen Sekundärleistung bereits vorab unterbunden, bevor der Primärregler reagiert. Es kann hier etwas länger dauern, bis der richtige Wert der Primärleistung erreicht wird, da der Primärregler durch die sekundärseitige Umschaltung keine Information über das Ausmaß der sekundärseitigen Abweichung zwischen Istwert und Sollwert der Zielgröße, d.h. des Ladestromes erhält.

Bei einer Abweichung des gemessenen Wertes des Ladestromes von seinem Sollwert führt die Schalteinrichtung einen von dem Verhältnis zwischen dem Sollwert und dem gemessenen Wert abhängigen zeitlichen Ablauf von Schaltvorgängen aus. In Abhängigkeit von diesem Schaltmuster, das auf die Primärseite zurückwirkt und dort anhand eines elektrischen Betriebsparameters detektiert werden kann, wird dann die einspeisbare Primärleistung eingestellt.

Die Erfindung beschränkt sich nicht auf eine Leistungsregelung in einer Richtung, d.h. auf eine Reduzierung der Primärleistung, sondern sie beinhaltet auch die Erhöhung der Primärleistung bei Bedarf, indem in dem zeitlichen Muster der sekundärseitig erfolgenden und primärseitig detektierten Schaltvorgänge auch die Richtung der Abweichung zwischen Istwert und Sollwert einer sekundärseitigen Zielgröße codiert werden kann. Auf den Empfang eines entsprechenden Codes hin kann die Primärleistung auch um eine vorbestimmte Stufe oder mit einer vorbestimmten zeitlichen Rate erhöht werden.

Weitere Einzelheiten und Vorteile der Erfindung offenbart die nachfolgende Beschreibung eines Ausführungsbeispiels anhand der Zeichnungen. In diesen zeigt
- Fig. 1: ein Blockschaltbild der Sekundärseite einer erfindungsgemäßen Vorrichtung und
- Fig. 2: ein Blockschaltbild der Primärseite einer erfindungsgemäßen Vorrichtung.

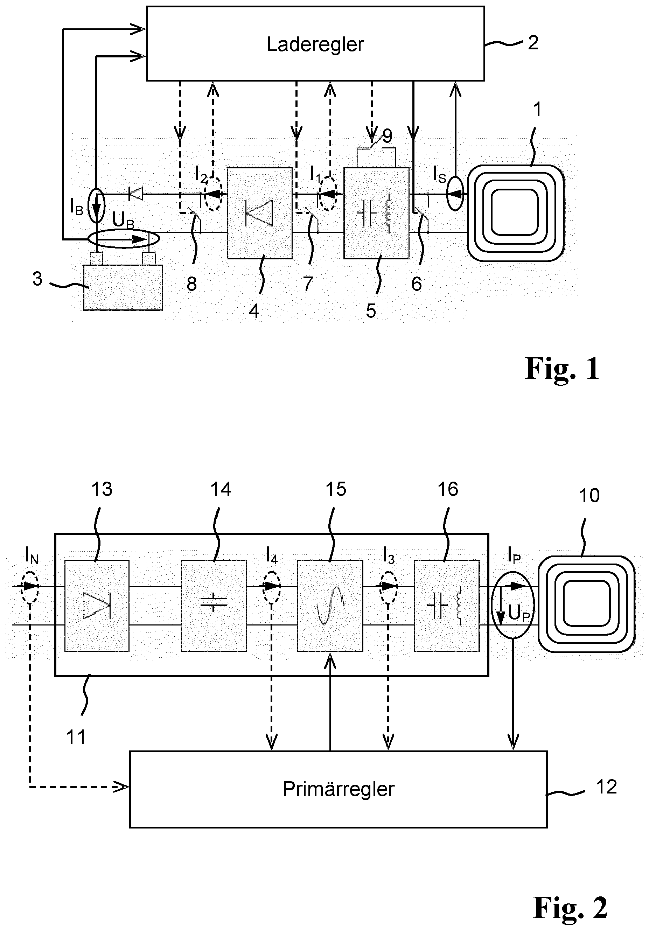

Wie das Blockschaltbild von Fig. 1 zeigt, weist die an Bord eines nicht gezeigten, elektrisch angetriebenen Fahrzeugs angeordnete Sekundärseite einer erfindungsgemäßen Vorrichtung zur induktiven Energieübertragung unter anderem eine Sekundärspule 1, einen Laderegler 2 als Sekundärregler und eine Batterie 3 auf. Die Batterie 3 wird im Betrieb der Vorrichtung mit einem Gleichstrom I_{B} geladen, der aus einem in der Sekundärspule 1 induzierten Wechselstrom I_{S} durch einen Wandler 4 umgewandelt wird. Der Wandler 4 enthält einen Gleichrichter und kann zusätzlich einen Spannungswandler enthalten, falls die Ausgangsspannung des Gleichrichters zum Laden der Batterie 3 noch einer Reduzierung bedarf. Da die gesamte Anordnung zusammen mit der nachfolgend noch anhand Fig. 1 zu erläuternden Primärseite in Resonanz betrieben wird, ist zwischen die Sekundärspule 1 und den Wandler 4 ein Abgleichnetzwerk 5 geschaltet. Durch die Beschaltung mit diesem Abgleichnetzwerk 5 wird die Erfüllung der Resonanzbedingung bei der gewünschten Betriebsfrequenz sichergestellt.

Der Laderegler 2 enthält eine Messeinrichtung, mittels derer er die Batteriespannung U_{B} der Batterie 3 und den Ladestrom I_{B} messen kann. Aus diesen Größen kann der momentane Ladezustand der Batterie 3 bestimmt werden. Aus diesem ergibt sich für den Ladestrom I_{B} ein Sollwert I₀, der sich im Verlauf eines Ladevorgangs ändert, insbesondere abnimmt. Darüber hinaus ist der Laderegler 2 auch dazu eingerichtet, den in der Sekundärspule 1 fließenden Sekundärstrom I_{S} zu messen. Zur Beeinflussung des Ladestromes I_{B} durch den Laderegler 2 ist parallel zu der Sekundärspule 1 ein von dem Laderegler 2 steuerbarer Schalter 6 vorgesehen, durch den die Sekundärspule 1 kurzgeschlossen werden kann.

Alternativ zur Messung des Sekundärstromes I_{S} könnte auch eine Messung des Ausgangsstromes I₁ oder I₂ des Abgleichnetzwerks 5 bzw. des Wandlers 4 vorgesehen sein. Alternativ zu dem Schalter 6 könnte auch ein Schalter 7 oder 8 zum Kurzschließen des Eingangs bzw. des Ausgangs des Wandlers 4 vorgesehen sein. Die Messung des Ausgangsstromes I₂ des Wandlers 4 ist nur in Kombination mit einem Schalter 8 am Ausgang des Wandlers 4 sinnvoll, da der Strom I₂ andernfalls stets mit dem Ladestrom I_{B} identisch ist. Des weiteren könnte alternativ zu dem Schalter 6 auch ein Schalter 9 zum Kurzschließen oder Auftrennen eines Schaltungszweiges innerhalb des Abgleichnetzwerks 5 vorgesehen sein. Es ist offensichtlich, dass durch jeden der Schalter 6 bis 9 eine Beeinflussung, d.h. effektiv eine Abschaltung des Ladestromes I_{B} möglich ist. Die Wirkung des Schalters 9 beruht darauf, dass durch dessen Betätigung die Funktion des Abgleichnetzwerks 5 aufgehoben wird und das normalerweise in Resonanz betriebene System dadurch außer Resonanz gerät, was zu einem signifikanten Abfall des Ladestromes I_{B} führt.

Die Primärseite einer erfindungsgemäßen Vorrichtung umfasst, wie aus dem Blockschaltbild von Fig. 2 hervorgeht, eine Primärspule 10, die von einer Stromversorgungseinrichtung 11 mit einem Primärstrom I_{P} gespeist wird, und einen Primärregler 12. Dieser enthält eine Messeinrichtung, mittels derer er den Primärstrom I_{P} messen kann. Die Stromversorgungseinrichtung 11 umfasst einen Gleichrichter 13, dessen Eingang an ein Stromversorgungsnetz angeschlossen ist, einen mit dem Ausgang des Gleichrichters 13 verbundenen Zwischenkreis 14, der aus der Ausgangsspannung des Gleichrichters eine Gleichspannung vorbestimmter Größe erzeugt, und einen Umrichter 15, der aus der Gleichspannung des Zwischenkreises 14, mit der er versorgt wird, eine Wechselspannung vorbestimmter Frequenz und Amplitude erzeugt, die der Primärspule 10 zugeführt wird.

Da die gesamte Anordnung zusammen mit der der vorausgehend anhand Fig. 1 erläuterten Primärseite in Resonanz betrieben werden soll, ist zwischen den Umrichter 15 und die Primärspule 10 noch ein Abgleichnetzwerk 16 geschaltet. Durch die Beschaltung mit diesem Abgleichnetzwerk 16 wird die Erfüllung der Resonanzbedingung bei der gewünschten Betriebsfrequenz sichergestellt. Wie in Fig. 2 analog zu Fig. 1 gestrichelt dargestellt ist, könnte auf der Primärseite alternativ zur Messung des Primärstromes I_{P} auch eine Messung des Ausgangsstromes I₃ oder des Eingangsstromes I₄ oder der Eingangsspannung U₄ des Umrichters 15 oder des Eingangsstromes IN des Gleichrichters 13 aus dem Stromversorgungsnetz vorgesehen sein.

Die Erfindung ermöglicht eine Regelung der primärseitig einspeisbaren Leistung, d.h. der Primärleistung, die der Primärspule 10 bei maximaler sekundärseitiger Leistungsentnahme zugeführt werden kann, in Abhängigkeit vom sekundärseitigen Leistungsbedarf, der sich aus dem Sollwert des Ladestromes I_{B} ergibt, ohne Bereitstellung eines separaten Kommunikationskanals zwischen der Sekundärseite und der Primärseite. Es versteht sich, dass die tatsächlich in die Primärspule 10 fließende Leistung stets von der Beschaltung der Sekundärspule 1 abhängt. Soweit hier von einer Einstellung der Primärleistung die Rede ist, ist damit immer die maximal angebotene Primärleistung gemeint. Nachfolgend wird die Funktionsweise der erfindungsgemäßen Vorrichtung erläutert.

Nach Inbetriebnahme der Vorrichtung, die nach dem Abstellen eines Fahrzeugs an einer Ladestation unter passender Ausrichtung der Sekundärspule 1 zu der Primärspule 10 durch ein hier nicht interessierendes Initiierungssignal erfolgt, stellt der Primärregler 12 den Umrichter 15 auf maximale Leistung ein, wobei diese von den Nennleistungsdaten der Sekundärseite abhängen kann, welche dem Primärregler 12 in diesem Fall bekannt sein müssen. Hieraus ergibt sich ein entsprechender Maximalwert des Primärstromes I_{P} und entsprechende Maximalwerte des Sekundärstromes I_{S} und des Ladestromes I_{B} der Batterie 3.

Wenn der Wert des Ladestromes I_{B} für den aktuellen Ladezustand des Batterie 3 zu groß ist, dann schließt der Laderegler 2 die Sekundärspule 1 durch Schließen des Schalters 6 kurz, wodurch die Sekundärseite abgesehen von Verlusten in der Sekundärspule 1 selbst keine Leistung mehr aufnimmt. Dieser sekundärseitige Kurzschluss wirkt auf die Primärseite zurück und verursacht eine sprunghafte Änderung der von der Primärspule 10 aus der Stromversorgungseinrichtung 11 aufgenommenen Primärleistung. Diese wird durch den Primärregler 12 anhand des Primärstromes I_{P} und der Primärspannung U_{P} detektiert und signalisiert ihm einen sekundärseitigen Bedarf an einer Reduzierung der angebotenen Primärleistung.

Nach einer ersten Ausführungsform der Erfindung ermittelt eine in dem Laderegler 2 enthaltene Recheneinrichtung aus dem gemessenen Wert des Ladestromes I_{B} und dessen aktuellem Sollwert I₀ das Ausmaß der nötigen Reduzierung des Ladestromes I_{B}, welches durch das Verhältnis I₀/I_{B} gegeben ist. Der Laderegler schließt und öffnet den Kurzschlussschalter 6 periodisch mit einem Tastverhältnis der Öffnungszeit T₀ zur gesamten Periodendauer T_{P}, welches dem Verhältnis I₀/I_{B} entspricht. Dasselbe Tastverhältnis T₀/T_{P} weist auch der zeitliche Verlauf der von dem Primärregler 12 gemessenen Primärleistung auf, der als Folge der Betätigung des Schalters 6 ebenfalls periodisch zwischen zwei Werten wechselt.

Aus dem Tastverhältnis T₀/T_{P} errechnet eine in dem Primärregler 12 enthaltene Recheneinrichtung die Änderung der Amplitude des Primärstromes I_{P}, welche zur Anpassung des Ladestromes I_{B} an seinen Sollwert I₀ nötig ist, und nimmt über eine Steuerleitung eine entsprechende Änderung der Einstellung des Umrichters 15 vor. Hierzu enthält der Umrichter 15 beispielsweise eine H-Brückenschaltung. Deren Schaltwinkel wird auf einen Wert geändert, der einen Primärstrom I_{P} mit dem benötigten Wert zur Folge hat. Im einfachsten Fall kann die Amplitude des Primärstromes I_{P} um einen Faktor reduziert werden, der durch Multiplikation des Verhältnisses T₀/T_{P} mit einem Korrekturfaktor berechnet wird. Es kann jedoch auch ein komplexerer Zusammenhang vorliegen und rechnerisch berücksichtigt werden.

Auf die vorausgehend beschriebene Weise kann die primärseitige Leistung nur reduziert werden, was beim Laden einer Batterie auch der Normalfall ist, da der benötigte Ladestrom I_{B} mit zunehmender Aufladung der Batterie 3 abnimmt. Es kann jedoch auch vorkommen, dass der Ladestrom I_{B} im Verlauf eines Ladevorgangs erhöht werden muss, beispielsweise wenn sich das Gewicht des Fahrzeugs während des Ladevorgangs durch Aussteigen von Personen oder Entladen von Gegenständen aus dem Koffer- oder Laderaum verringert. Durch Ausfedern des Fahrwerks kommt es dann zu einer Vergrößerung des Luftspalts zwischen der an der Unterseite des Fahrzeugs montierten Sekundärspule 1 und der an der Ladestation am Boden angeordneten Primärspule 10, wodurch ein Absinken der induktiv übertragenen Leistung verursacht wird.

Um von der Sekundärseite aus einen Bedarf an einer Erhöhung der angebotenen Primärleistung zu signalisieren, führt der Laderegler 2 mit dem Kurzschlussschalter 6 einen oder mehrere Schaltvorgänge aus, deren zeitlicher Verlauf von dem für die Signalisierung eines Reduzierungsbedarfs definierten Muster signifikant abweicht. Beispielsweise kann ein Schließen des Schalters für ein die Periodendauer T_{P} deutlich überschreitendes Zeitintervall oder ein periodisches Schließen und Öffnen mit einer von der Periodendauer T_{P} abweichenden, deutlich kürzeren Periodendauer und einem charakteristischen Tastverhältnis vorgesehen sein. Ein solches Signalmuster wird von dem Primärregler als Anforderung einer Leistungserhöhung interpretiert und führt zu einer entsprechenden Ansteuerung des Umrichters 15.

Das Ausmaß der nötigen Erhöhung der Primärleistung kann von dem Laderegler 2 analog zum Ausmaß einer nötigen Verringerung ebenfalls durch das Tastverhältnis einer periodischen Betätigung des Schalters 6 signalisiert werden, oder die Primärleistung kann ohne Kenntnis des nötigen Ausmaßes um eine Stufe vorbestimmter Höhe oder kontinuierlich mit einer vorbestimmten zeitlichen Rate erhöht werden. Falls eine Erhöhung um eine Stufe unzureichend sein sollte, kann der Laderegler 2 auf dieselbe Weise solange weitere Erhöhungen anfordern, bis der Ladestrom I_{B} den Sollwert I₀ erreicht oder überschreitet. Bei einer Überschreitung kann wiederum auf die zuvor beschriebene Weise eine Verringerung bzw. ein Ende der kontinuierlichen Erhöhung angefordert werden. In jedem Fall ist es sinnvoll, wenn der Laderegler 2 eine Änderung der Primärleistung immer nur dann anfordert, wenn die Abweichung des Ladestromes I_{B} von seinem Sollwert I₀ eine Toleranzschwelle überschreitet, um ein ständiges Pulsieren um den Sollwert I₀ herum zu vermeiden.

Nach einer zweiten, einfacheren Ausführungsform der Erfindung wird darauf verzichtet, das nötige Ausmaß der Leistungsverringerung durch eine periodische Tastung der Sekundärleistung zur Primärseite zu signalisieren, sondern der sekundärseitige Kurzschlussschalter 6 wird bei einer Überschreitung des Sollwertes I₀ des Ladestromes I_{B} durch den Laderegler 2 geschlossen und der Primärregler 12 stellt dies anhand der Primärleistung fest und verringert daraufhin die angebotene Primärleistung, d.h.den Wert des Primärstromes I_{P} stufenweise oder kontinuierlich mit einer vorbestimmten zeitlichen Rate.

Da nach dem Schließen des Kurzschlussschalters 6 der Ladestrom I_{B} auf Null absinkt, steht dieser dann als Messgröße nicht mehr zur Verfügung, so dass sekundärseitig ein anderes Kriterium für das Erreichen des richtigen Arbeitspunktes des Systems benötigt wird. Als Kriterium wird in diesem Fall der Sekundärstrom I_{S} herangezogen, der auch bei einem Kurzschluss der Sekundärspule 1 durch den Schalter 6 von Null verschieden ist. Hierzu muss allerdings der Zusammenhang zwischen dem Sekundärstrom I_{S} bei Kurzschluss und dem Ladestrom I_{B} bei offenem Schalter 6 bekannt sein. Dieser Zusammenhang kann vorab experimentell ermittelt und in einem Speicher des Ladereglers 2 gespeichert werden. Der Zusammenhang zwischen I_{S} und I_{B} kann näherungsweise durch einen konstanten Faktor gegeben sein, aber es könnte sich auch um eine nichtlineare Kennlinie handeln, die als Formel oder Tabelle gespeichert werden kann.

Näherungsweise kann der Zusammenhang zwischen I_{S} und I_{B} auch im Betrieb ermittelt und gespeichert werden, wenn der Primärregler 12 den Primärstrom I_{P} zu Beginn des Ladevorgangs mit einer vorbestimmten zeitlichen Rate erhöht. In diesem Fall ist der Schalter 6 allerdings offen, d.h. der dann gemessene Strom I_{S} ist nicht der Kurzschlussstrom der Sekundärspule 1, so dass die Änderung des Sekundärstromes I_{S} durch das Öffnen des Schalters 6, d.h. der Unterschied zwischen Normalbetrieb und Kurzschluss der Sekundärspule 2, dann nicht berücksichtigt wird.

Im einfachsten Fall kann aus dem Verhältnis zwischen dem Sekundärstrom I_{S} unmittelbar nach dem Schließen des Schalters 6, d.h. noch vor einer Reaktion des Primärreglers 12 und dem Ladestrom I_{B} unmittelbar vor dem Schließen des Schalters 6 ein Proportionalitätsfaktor ermittelt und ein Sollwert des Sekundärstromes I_{S} bei Kurzschluss durch Multiplikation des Sollwertes I₀ des Ladestromes mit diesem Proportionalitätsfaktor berechnet werden.

Der Laderegler 2 misst also bei der zweiten Ausführungsform nach dem Schließen des Schalters 6 den Sekundärstrom I_{S}, während der Primärregler 12 die primärseitig angebotene Leistung, d.h. den Primärstrom I_{P} mit einer konstanten Rate reduziert, und vergleicht den gemessenen Sekundärstrom I_{S} mit einem Sollwert I_{S0}, den er aus dem aktuellen Sollwert I₀ des Ladestromes I_{B} und dem gespeicherten Zusammenhang zwischen I_{S} und I_{B} ermittelt hat. Wenn der Sekundärstrom I_{S} seinen Sollwert I_{S0} erreicht hat, öffnet der Laderegler 2 den Schalter 6 wieder. Dieser Schaltvorgang wirkt auf die Primärseite zurück und wird von der Messeinrichtung des Primärreglers 12 anhand der Primärleistung detektiert, woraufhin der Primärregler 12 die Reduktion des Primärstromes I_{P} bei dem aktuell erreichten Wert beendet.

Ein Bedarf an einer Erhöhung der Primärleistung kann bei der zweiten Ausführungsform durch eine Betätigung des Schalters 6 nach einem vorbestimmten zeitlichen Muster, beispielsweise durch einen oder mehrere sehr kurze Impulse signalisiert werden. In diesem Fall kann die Primärleistung durch den Primärregler 12 mit einer vorbestimmten zeitlichen Rate erhöht und die dadurch bewirkte Erhöhung des Ladestromes I_{B} von der Messeinrichtung des Ladereglers 2 direkt erfasst werden. Wenn der Ladestrom I_{B} seinen Sollwert erreicht, kann der Laderegler 2 dies dem Primärregler 12 durch eine erneute Betätigung des Schalters 6 nach einem vorbestimmten zeitlichen Muster signalisieren. Beispielsweise könnte hierzu dasselbe Muster verwendet werden wie zur Signalisierung eines erhöhten Leistungsbedarfs, da sich der Primärregler 12 dann bereits im Betriebsmodus der Leistungserhöhung befindet und der nochmalige Empfang desselben Signals dann anders interpretiert werden kann.

Während die erste Ausführungsform den Vorteil hat, dass sie keine Kalibrierung eines Zusammenhangs zwischen dem Ladestrom I_{B} und dem Sekundärstrom I_{S} benötigt, hat die zweite Ausführungsform den Vorteil, dass bei ihr wesentlich weniger Schaltvorgänge mit einer relativ großen geschalteten Leistung auftreten, die eine potentielle Quelle von elektromagnetischen Störungen darstellen und entsprechende Gegenmaßnahmen erforderlich machen können.

Wie in Fig. 1 mit den Schaltern 7 und 8 am Eingang bzw. Ausgang des Wandlers 4 sowie dem Schalter 9 an dem Abgleichnetzwerk 5 gezeigt ist, muss die Abschaltung des Ladestromes I_{B} und damit der Sekundärleistung nicht unmittelbar an der Sekundärspule 1 erfolgen, sondern kann alternativ auch an einer anderen Stelle der Sekundärseite vorgenommen werden. Dementsprechend muss bei der zweiten Ausführungsform auch nicht unbedingt der von der Sekundärspule geführte Strom I_{S} gemessen werden, sondern es könnte bei Verwendung eines Schalters 7 oder 8 am Ausgang des Abgleichnetzwerks 5 bzw. des Wandlers 4 auch jeweils der dortige Strom I₁ bzw. I₂ gemessen werden, wie es in Fig. 1 in gestrichelten Linien angedeutet ist. In diesem Fall müsste eine vorherige Kalibrierung des Zusammenhangs zwischen diesem jeweils bei geschlossenem Schalter 7 bzw. 8 gemessenen Strom I₁ bzw. I₂ und dem Ladestrom I_{B} bei offenem Schalter 7 bzw. 8 erfolgen. Bei einer Abschaltung des Ladestromes I_{B} mittels des Schalters 9 an dem Abgleichnetzwerk 5 muss ebenso wie bei Verwendung des Schalters 6 der Sekundärstrom I_{S} gemessen werden.

Wie in Fig. 2 gezeigt ist, muss die primärseitige Detektion einer auf der Sekundärseite über einen der Schalter 6 bis 9 erfolgten Leistungsabschaltung nicht unbedingt anhand der unmittelbar in die Primärspule 10 fließenden Leistung erfolgen, sondern dies kann alternativ auch anhand einer anderen primärseitigen elektrischen Größe wie insbesondere des Ausgangsstromes I₃ oder des Eingangsstromes I₄ des Umrichters 15 oder des von der Stromversorgungseinrichtung 11 aus dem Stromversorgungsnetz aufgenommenen Stromes IN erfolgen, wie es in Fig. 2 in gestrichelten Linien angedeutet ist. Alle diese Größen werden von einer sekundärseitigen Leistungsabschaltung beeinflusst und kommen somit grundsätzlich als Messgrößen zur Detektion einer solchen Leistungsabschaltung in Frage.

Aus der vorausgehenden Beschreibung von Ausführungsbeispielen ergeben sich für einen Fachmann Variationsmöglichkeiten zur Realisierung der Erfindung. So kommt es nicht darauf an, dass der Ladestrom I_{B} sekundärseitig völlig abgeschaltet wird, sondern es muss nur gewährleistet sein, dass seine Änderung durch einen sekundärseitigen Schaltvorgang so ausgeprägt ist, dass sie anhand eines primärseitigen Betriebsparameters ohne weiteres feststellbar ist. Des Weiteren könnte die sekundärseitige Umschaltung grundsätzlich auch zwischen mehr als zwei Stufen erfolgen, wenngleich die Umschaltung zwischen nur zwei Stufen besonders einfach realisierbar und daher bevorzugt ist. Was die primärseitige Einstellung anbelangt, so könnte anstelle des Schaltwinkels des Umrichters 15 auch die Schaltfrequenz und damit die Frequenz des Primärstromes I_{P} variiert werden, da sich auch hierdurch wegen der Auslegung des Übertragungssystems auf Resonanzbetrieb die übertragene Leistung ändert. Solche und vergleichbare Modifikationen liegen im Ermessen des Fachmannes und sollen vom Schutz der Ansprüche umfasst sein.

## Patentansprüche

1. Vorrichtung zur induktiven Übertragung elektrischer Energie von einer stationären Einheit mit einer Stromversorgungseinrichtung (11) und einer mit dieser verbundenen Primärinduktivität (10) zu einem benachbart zu der stationären Einheit stehenden Fahrzeug mit einer Sekundärinduktivität (1), wobei das Fahrzeug einen Sekundärregler (2) zur Einstellung der aus der Sekundärinduktivität (1) entnommenen Sekundärleistung aufweist, der eine Schalteinrichtung (6; 7; 8; 9) enthält, mittels derer die entnommene Sekundärleistung stufenweise änderbar ist, dass die stationäre Einheit einen Primärregler (12) zur Einstellung der in die Primärinduktivität (10) einspeisbaren Primärleistung aufweist, der eine erste Messeinrichtung enthält, mittels derer ein von der Sekundärleistung beeinflusster elektrischer Betriebsparameter der Stromversorgungseinrichtung (11) messbar ist, und dass der Primärregler (12) die einspeisbare Primärleistung in Abhängigkeit von Änderungen des von der ersten Messeinrichtung gemessenen Betriebsparameters einstellt, **dadurch gekennzeichnet, dass** in dem Fahrzeug eine Batterie (3) angeordnet ist, die im Betrieb der Vorrichtung mit einem aus dem Strom (I_{S}) der Sekundärinduktivität (1) erzeugten Ladestrom (I_{B}) geladen wird, dass der Sekundärregler (2) eine zweite Messeinrichtung enthält, mittels derer der Ladestrom (I_{B}) messbar ist, dass die Sekundärleistung durch die Schalteinrichtung (6; 7; 8; 9) zwischen zwei Stufen umschaltbar ist, und dass bei einer Überschreitung des Sollwertes des Ladestromes (I_{B}) durch den gemessenen Wert eine periodische Umschaltung zwischen den Stufen in einem vorbestimmten Zeittakt erfolgt, wobei das Tastverhältnis der Umschaltung zwischen den Stufen dem Verhältnis zwischen dem Sollwert und dem gemessenen Wert des Ladestromes (I_{B}) entspricht, und dass der Primärregler (12) beim Auftreten von sprunghaften Änderungen des durch die erste Messeinrichtung gemessenen Betriebsparameters den Wert der einspeisbaren Primärleistung in Abhängigkeit vom Tastverhältnis der Änderungen des Betriebsparameters ändert.

2. Vorrichtung zur induktiven Übertragung elektrischer Energie von einer stationären Einheit mit einer Stromversorgungseinrichtung (11) und einer mit dieser verbundenen Primärinduktivität (10) zu einem benachbart zu der stationären Einheit stehenden Fahrzeug mit einer Sekundärinduktivität (1), wobei das Fahrzeug einen Sekundärregler (2) zur Einstellung der aus der Sekundärinduktivität (1) entnommenen Sekundärleistung aufweist, der eine Schalteinrichtung (6; 7; 8; 9) enthält, mittels derer die entnommene Sekundärleistung stufenweise änderbar ist, dass die stationäre Einheit einen Primärregler (12) zur Einstellung der in die Primärinduktivität (10) einspeisbaren Primärleistung aufweist, der eine erste Messeinrichtung enthält, mittels derer ein von der Sekundärleistung beeinflusster elektrischer Betriebsparameter der Stromversorgungseinrichtung (11) messbar ist, und dass der Primärregler (12) die einspeisbare Primärleistung in Abhängigkeit von Änderungen des von der ersten Messeinrichtung gemessenen Betriebsparameters einstellt, **dadurch gekennzeichnet, dass** in dem Fahrzeug eine Batterie (3) angeordnet ist, die im Betrieb der Vorrichtung mit einem aus dem Strom (I_{S}) der Sekundärinduktivität (1) erzeugten Ladestrom (I_{B}) geladen wird, dass der Sekundärregler (2) eine zweite Messeinrichtung enthält, mittels derer der Ladestrom (I_{B}) messbar ist, dass die Sekundärleistung durch die Schalteinrichtung (6; 7; 8; 9) zwischen zwei Stufen umschaltbar ist, dass sie bei einer Überschreitung des Sollwertes des Ladestromes (I_{B}) durch den von der zweiten Messeinrichtung gemessenen Wert so lange von der höheren auf die niedrigere Stufe umgeschaltet wird, bis ein in der niedrigeren Stufe von der einspeisbaren Primärleistung abhängiger und von der zweiten Messeinrichtung messbarer elektrischer Betriebsparameter der Sekundärinduktivität (1) oder einer diese mit der Batterie (3) verbindenden Schaltung (4, 5) einen Wert erreicht, bei dem eine Umschaltung in die höhere Stufe zu einer Übereinstimmung des Ladestromes (I_{B}) mit seinem Sollwert führt, und dass der Primärregler (12) beim Auftreten einer sprunghaften Änderung des durch die erste Messeinrichtung gemessenen Betriebsparameters den Wert der einspeisbaren Primärleistung mit einer vorbestimmten zeitlichen Rate so lange verringert, bis eine weitere sprunghafte Änderung des durch die erste Messeinrichtung gemessenen Betriebsparameters auftritt.

3. Vorrichtung nach Anspruch 1 oder 2, **dadurch gekennzeichnet, dass** die Sekundärleistung in einer der Stufen annähernd, nämlich bis auf Verluste in der Sekundärinduktivität (1), den Wert Null hat.

4. Vorrichtung nach einem der Ansprüche 1 bis 3, **dadurch gekennzeichnet, dass** der Sekundärregler (2) eine Recheneinrichtung enthält, welche bei einer Abweichung des von der zweiten Messeinrichtung gemessenen Wertes des Ladestromes (I_{B}) von einem Sollwert einen von dem Verhältnis zwischen dem Sollwert und dem gemessenen Wert des Ladestromes (I_{B}) abhängigen zeitlichen Ablauf von Schaltvorgängen ermittelt, der von der Schalteinrichtung (6; 7; 8; 9) ausgeführt wird.

5. Vorrichtung nach Anspruch 4, **dadurch gekennzeichnet, dass** der zeitliche Ablauf der Schaltvorgänge einen Code enthält, der anzeigt, ob die Abweichung des gemessenen Wertes des Ladestromes (I_{B}) von seinem Sollwert positiv oder negativ ist.

6. Vorrichtung nach Anspruch 4 oder 5, **dadurch gekennzeichnet, dass** der Primärregler (12) beim Auftreten von sprunghaften Änderungen des durch die erste Messeinrichtung gemessenen Betriebsparameters den Wert der einspeisbaren Primärleistung in Abhängigkeit vom zeitlichen Ablauf der Änderungen des Betriebsparameters ändert.

7. Vorrichtung nach einem der Ansprüche 2 bis 6, **dadurch gekennzeichnet, dass** der von der zweiten Messeinrichtung messbare Betriebsparameter der von der Sekundärinduktivität (1) geführte Strom (I_{S}) oder der Ausgangsstrom (I₁) eines der Sekundärinduktivität (1) nachgeschalteten Abgleichnetzwerks (5) oder der Ausgangsstrom (I₂) eines der Batterie (3) vorgeschalteten Wandlers (4) ist.

8. Vorrichtung nach einem der Ansprüche 5 bis 7, **dadurch gekennzeichnet, dass** bei Vorhandensein eines eine Unterschreitung des Sollwertes des Ladestromes (I_{B}) durch den gemessenen Wert anzeigenden Codes im zeitlichen Ablauf der von der Schalteinrichtung (6; 7; 8; 9) ausgeführten Schaltvorgänge die einspeisbare Primärleistung durch den Primärregler (12) um eine vorbestimmte Stufe oder mit einer vorbestimmten zeitlichen Rate erhöht wird.

9. Vorrichtung nach einem der Ansprüche 1 bis 8, **dadurch gekennzeichnet, dass** der von der ersten Messeinrichtung gemessene Betriebsparameter der Stromversorgungseinrichtung (11) die an der Primärspule 10 liegende Spannung (U_{P}) oder der Ausgangsstrom (I₃) oder der Eingangsstrom (I₄) eines in der Stromversorgungseinrichtung enthaltenen Umrichters (15) oder der von der Stromversorgungseinrichtung (11) aus dem Stromversorgungsnetz aufgenommene Strom (IN) ist.

10. Vorrichtung nach einem der Ansprüche 1 bis 9, **dadurch gekennzeichnet, dass** die Schalteinrichtung (6; 7; 8; 9) ein zweipoliger Schalter ist, der parallel zu der Sekundärinduktivität (1) oder zum Ausgang eines der Sekundärinduktivität (1) nachgeschalteten Abgleichnetzwerks (5) oder zum Ausgang (I₂) eines der Batterie (3) vorgeschalteten Wandlers (4) geschaltet ist.

11. Vorrichtung nach einem der Ansprüche 1 bis 10, **dadurch gekennzeichnet, dass** die Schalteinrichtung (6; 7; 8; 9) ein zweipoliger Schalter ist, der parallel oder in Reihe zu mindestens einem Element eines der Sekundärinduktivität (1) nachgeschalteten Abgleichnetzwerks (5) geschaltet ist, so dass die Funktion des Abgleichnetzwerks (5) von der Schalterstellung abhängt.

## Claims

1. Device for inductive transfer of electrical energy from a stationary unit with a power supply arrangement (11) and a primary induction coil (10) connected with the latter to a vehicle standing adjacent to the stationary unit with a secondary induction coil (1), wherein the vehicle has a secondary controller (2) for adjusting the secondary power extracted from the secondary induction coil (1) and which contains a switching device (6; 7; 8; 9) by means of which the secondary power extracted can be altered in stages, wherein the stationary unit has a primary controller (12) for adjusting the primary power that can be fed into the primary induction coil (10) and which contains a first measuring device by means of which an electrical operating parameter of the power supply arrangement (11) influenced by the secondary power can be measured, and wherein the primary controller (12) adjusts the primary power that can be fed in dependence on changes in the operating parameter measured by the first measuring device, **characterised in that** arranged in the vehicle there is a battery (3) which when the device is operating is charged with a charging current (I_{B}) produced from the current (I_{S}) of the secondary induction coil (1), **in that** the secondary controller (2) contains a second measuring device by means of which the charging current (I_{B}) can be measured, **in that** the secondary power can be switched between two stages by the switching device (6; 7; 8; 9), and **in that** if the measured value exceeds the set value for the charging current (I_{B}) periodic switching takes place between the stages at a predetermined rate over time, the duty cycle or ratio of the switching between the stages corresponding to the ratio between the set value and the measured value of the charging current (I_{B}), and **in that** if irregular or sudden changes occur in the operating parameter measured by the first measuring device the primary controller (12) changes the value of the primary power that can be fed in dependence on the duty cycle or ratio of the changes in the operating parameter.

2. Device for inductive transfer of electrical energy from a stationary unit with a power supply arrangement (11) and a primary induction coil (10) connected with the latter to a vehicle standing adjacent to the stationary unit with a secondary induction coil (1), wherein the vehicle has a secondary controller (2) for adjusting the secondary power extracted from the secondary induction coil (1) and which contains a switching device (6; 7; 8; 9) by means of which the secondary power extracted can be altered in stages, wherein the stationary unit has a primary controller (12) for adjusting the primary power that can be fed into the primary induction coil (10) and which contains a first measuring device by means of which an electrical operating parameter of the power supply arrangement (11) influenced by the secondary power can be measured, and wherein the primary controller (12) adjusts the primary power that can be fed in dependence on changes in the operating parameter measured by the first measuring device, **characterised in that** arranged in the vehicle there is a battery (3) which when the device is operating is charged with a charging current (I_{B}) produced from the current (I_{S}) of the secondary induction coil (1), **in that** the secondary controller (2) contains a second measuring device by means of which the charging current (I_{B}) can be measured, **in that** the secondary power can be switched between two stages by the switching device (6; 7; 8; 9), **in that** if the value measured by the second measuring device exceeds the set value for the charging current (I_{B}) the secondary power is switched from the higher to the lower stage until an electrical operating parameter of the secondary induction coil (1) or of a circuit (4, 5) connecting this with the battery (3) which is dependent on the primary power that can be fed in in the lower stage and measurable by the second measuring device reaches a value at which switching to the higher stage leads to the charging current (I_{B}) matching its set value, and **in that** if an irregular or sudden change occurs in the operating parameter measured by the first measuring device the primary controller (12) reduces the value of the primary power that can be fed in with a predetermined rate over time until a further irregular or sudden change occurs in the operating parameter measured by the first measuring device.

3. Device according to claim 1 or 2, **characterised in that** in one of the stages the secondary power has a value approaching zero, namely excluding losses in the secondary induction coil (1).

4. Device according to one of claims 1 to 3, **characterised in that** the secondary controller (2) contains a calculating unit which if the value of the charging current (I_{B}) measured by the second measuring device deviates from a set value determines a sequence of switching operations over time dependent on the ratio between the set value and the measured value of the charging current (I_{B}) which is carried out by the switching device (6; 7; 8; 9).

5. Device according to claim 4, **characterised in that** the sequence of switching operations over time contains a code which indicates whether the deviation of the measured value of the charging current (I_{B}) from its set value is positive or negative.

6. Device according to claim 4 or 5, **characterised in that** if irregular or sudden changes occur in the operating parameter measured by the first measuring device the primary controller (12) changes the value of the primary power that can be fed in dependence on the changes in the operating parameter over time.

7. Device according to one of claims 2 to 6, **characterised in that** the operating parameter that can be measured by the second measuring device is the current (I_{S}) carried by the secondary induction coil (1) or the output current (I₁) of a matching network (5) connected after the secondary induction coil (1) or the output current (I₂) of a transformer (4) connected in front of the battery (3).

8. Device according to one of claims 5 to 7, **characterised in that** in the presence of a code indicating that the measured value of the charging current (I_{B}) is below the set value in the sequence of switching operations over time carried out by the switching device (6; 7; 8; 9), the primary controller (12) increases the primary power that can be fed in by a predetermined stage or with a predetermined rate over time.

9. Device according to one of claims 1 to 8, **characterised in that** the operating parameter of the power supply arrangement (11) measured by the first measuring device is the voltage (U_{P}) at the primary coil (10) or the output current (I₃) or the input current (I₄) of an inverter (15) contained in the power supply arrangement or the current (IN) drawn by the power supply arrangement (11) from the mains power supply.

10. Device according to one of claims 1 to 9, **characterised in that** the switching device (6; 7; 8; 9) is a two-pole switch which is connected parallel to the secondary induction coil (1) or to the output of a matching network (5) connected after the secondary induction coil (1) or to the output (I₂) of a transformer (4) connected in front of the battery (3).

11. Device according to one of claims 1 to 10, **characterised in that** the switching device (6; 7; 8; 9) is a two-pole switch which is connected parallel to or in series with at least one element of a matching network (5) connected after the secondary induction coil (1) so that the operation of the matching network (5) is dependent on the position of the switch.

## Revendications

1. Dispositif servant à transmettre par induction une énergie électrique depuis une unité stationnaire pourvue d'un système d'alimentation en courant (11) et d'une inductance primaire (10) reliée à ce dernier à un véhicule situé de manière adjacente par rapport à l'unité stationnaire, pourvu d'une inductance secondaire (1), dans lequel
le véhicule présente un régulateur secondaire (2) servant à régler la puissance secondaire prélevée de l'inductance secondaire (1), lequel contient un dispositif de commutation (6 ; 7 ; 8 ; 9), au moyen duquel la puissance secondaire prélevée peut être modifiée par paliers, l'unité stationnaire présente un régulateur primaire (12) servant à régler la puissance primaire pouvant être injectée dans l'inductance primaire (10), lequel régulateur primaire contient un premier système de mesure, au moyen duquel un paramètre de fonctionnement électrique, influencé par la puissance secondaire, du système d'alimentation en courant (11) peut être mesuré, et que le régulateur primaire (12) règle la puissance primaire pouvant être injectée en fonction de modifications du paramètre de fonctionnement mesuré par le premier système de mesure, **caractérisé en ce**
**qu'**est disposée, dans le véhicule, une batterie (3), qui est chargée lors du fonctionnement du dispositif avec un courant de charge (I_{B}) produit à partir du courant (Iₛ) de l'inductance secondaire (1), en ce que le régulateur secondaire (2) contient un deuxième système de mesure, au moyen duquel le courant de charge (I_{B}) peut être mesuré, en ce que la puissance secondaire peut être commutée par le système de commutation (6 ; 7 ; 8 ; 9) entre deux paliers, et en ce qu'en cas d'un dépassement de la valeur théorique du courant de charge (I_{B}) par la valeur mesurée, une commutation périodique entre les paliers a lieu selon une cadence temporelle prédéfinie, dans lequel le rapport cyclique de la commutation entre les paliers correspond au rapport entre la valeur théorique et la valeur mesurée du courant de charge (I_{B}), et en ce que le régulateur primaire (12) modifie, en cas d'apparition de modifications brutales du paramètre de fonctionnement mesuré par le premier système de mesure, la valeur de la puissance primaire pouvant être injectée en fonction du rapport cyclique des modifications du paramètre de fonctionnement.

2. Dispositif servant à transférer par induction une énergie électrique d'une unité stationnaire pourvue d'un système d'alimentation en courant (11) et d'une inductance primaire (10) reliés à ce dernier, à un véhicule se trouvant de manière adjacente par rapport à l'unité stationnaire et pourvu d'une inductance secondaire (1), dans lequel
le véhicule présente un régulateur secondaire (2) servant à régler la puissance secondaire prélevée de l'inductance secondaire (1), lequel régulateur secondaire contient un système de commutation (6 ; 7 ; 8 ; 9), au moyen duquel la puissance secondaire prélevée peut être modifiée par paliers, l'unité stationnaire présente un régulateur primaire (12) servant à régler la puissance primaire pouvant être injectée dans l'inductance primaire (10), lequel régulateur primaire contient un premier système de mesure, au moyen duquel un paramètre de fonctionnement électrique, influencé par la puissance secondaire, du système d'alimentation en courant (11) peut être mesuré, et que le régulateur primaire (12) règle la puissance primaire pouvant être injectée en fonction de modifications du paramètre de fonctionnement mesuré par le premier système de mesure, **caractérisé en ce qu'**est disposée, dans le véhicule, une batterie (3), qui est chargée lors du fonctionnement du dispositif avec un courant de charge (I_{B}) produit à partir du courant (Iₛ) de l'inductance secondaire (1), **en ce que** le régulateur secondaire (2) contient un deuxième système de mesure, au moyen duquel le courant de charge (I_{B}) peut être mesuré, **en ce que** la puissance secondaire peut être commutée par le système de commutation (6 ; 7 ; 8 ; 9) entre deux paliers, et **en ce qu'**en cas d'un dépassement de la valeur théorique du courant de charge (I_{B}) par la valeur mesurée par le deuxième système de mesure, une commutation du palier le plus élevé sur le palier le plus bas est réalisée jusqu'à ce qu'un paramètre de fonctionnement électrique, dépendant dans le palier le plus bas d'une puissance primaire pouvant être injectée et pouvant être mesuré par le deuxième système de mesure, de l'inductance secondaire (1) ou d'un circuit (4, 5) reliant cette dernière à la batterie (3) atteigne une valeur, pour laquelle une commutation dans le palier le plus élevé conduit à une concordance du courant de charge (I_{B}) et de sa valeur théorique, et **en ce que** le régulateur primaire (12) réduit, lors de l'apparition d'une modification brutale du paramètre de fonctionnement mesuré par le premier système de mesure, la valeur de la puissance primaire pouvant être injectée selon une vitesse temporelle prédéfinie jusqu'à ce qu'une autre modification brutale du paramètre de fonctionnement mesuré par le premier système de mesure apparaisse.

3. Dispositif selon la revendication 1 ou 2, **caractérisé en ce que** la puissance secondaire a la valeur nulle approximativement dans l'un des paliers, à l'exception de pertes dans l'inductance secondaire (1).

4. Dispositif selon l'une quelconque des revendications 1 à 3, **caractérisé en ce que** le régulateur secondaire (2) contient un système de calcul, qui détermine, dans le cas d'un écart entre la valeur, mesurée par le deuxième système de mesure, du courant de charge (I_{B}) et une valeur théorique, un déroulement dans le temps, dépendant du rapport entre la valeur théorique et la valeur mesurée du courant de charge (I_{B}), d'opérations de commutation, lequel est exécuté par le système de commutation (6 ; 7 ; 8 ; 9).

5. Dispositif selon la revendication 4, **caractérisé en ce que** le déroulement dans le temps des opérations de commutation contient un code, qui indique si l'écart entre la valeur mesurée du courant de charge (I_{B}) et sa valeur théorique est positif ou négatif.

6. Dispositif selon la revendication 4 ou 5, **caractérisé en ce que** le régulateur primaire (12) modifie, lors de l'apparition de modifications brutales du paramètre de fonctionnement mesuré par le premier système de mesure, la valeur de la puissance primaire pouvant être injectée en fonction du déroulement dans le temps des modifications du paramètre de fonctionnement.

7. Dispositif selon l'une quelconque des revendications 2 à 6, **caractérisé en ce que** le paramètre de fonctionnement pouvant être mesuré par le deuxième système de mesure est le courant (Iₛ) guidé par l'inductance secondaire (1) ou le courant de sortie (I₁) d'un réseau d'égalisation (5) monté en aval de l'inductance secondaire (1) ou le courant de sortie (I₂) d'un transducteur (4) monté en amont de la batterie (3).

8. Dispositif selon l'une quelconque des revendications 5 à 7, **caractérisé en ce qu'**en cas de présence d'un code indiquant que la valeur mesurée est inférieure à la valeur théorique du courant de charge (I_{B}), la puissance primaire pouvant être injectée est augmentée lors du déroulement dans le temps des opérations de commutation exécutées par le système de commutation (6 ; 7 ; 8 ; 9) par le régulateur primaire (12) d'un palier prédéfini ou d'une vitesse dans le temps prédéfinie.

9. Dispositif selon l'une quelconque des revendications 1 à 8, **caractérisé en ce que** le paramètre de fonctionnement, mesuré par le premier système de mesure, du système d'alimentation en courant (11) est la tension (Uₚ) appliquée au niveau de la bobine primaire (10) ou le courant de sortie (I₃) ou le courant d'entrée (I₄) d'un onduleur (15) contenu dans le système d'alimentation en courant ou le courant (I_{N}) absorbé par le système d'alimentation en courant (11) provenant du réseau d'alimentation en courant.

10. Dispositif selon l'une quelconque des revendications 1 à 9, **caractérisé en ce que** le système de commutation (6 ; 7 ; 8 ; 9) est un commutateur bipolaire, qui est monté en parallèle par rapport à l'inductance secondaire (1) ou par rapport à la sortie d'un réseau d'égalisation (5) monté en aval de l'inductance secondaire (1) ou par rapport à la sortie (I₂) d'un transducteur (4) monté en amont de la batterie (3).

11. Dispositif selon l'une quelconque des revendications 1 à 10, **caractérisé en ce que** le système de commutation (6 ; 7 ; 8 ; 9) est un commutateur bipolaire, qui est monté en parallèle ou en série par rapport à au moins un élément d'un réseau d'égalisation (5) monté en aval de l'inductance secondaire (1) de sorte que la fonction du réseau d'égalisation (5) dépend de la position du commutateur.
